# EUROPEAN PATENT APPLICATION

(11) **EP 4 617 596 A1**
(43) Date of publication of application: **17.09.2025**
(21) Application number: 24162865.0
(22) Date of filing: 12.03.2024
(51) Int. Cl.: F25J 1/00, F25J 1/02, C01B 3/02

(54) **PROCESS FOR PRODUCING LIQUEFIED HYDROGEN**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Stroffolino, Joseph, 608526 Singapore (SG); Pages, Baptiste, Hyogo 651-0087 (JP)
(74) Representative: Air Liquide

(57) **Abstract**

A process for producing and liquefying hydrogen, said process comprising the following steps:
- Providing an ammonia feedstock stream,
- Producing a hydrogen gas product by a gas conversion,
- Wherein at least part of said ammonia feedstock stream is converted by said gas conversion and/or at least part of said ammonia feedstock stream is combusted to bring heat to the process, in particular to said gas conversion,
- Liquefying the hydrogen gas product at least by:
∘ precooling said hydrogen gas product under conditions to precool said hydrogen gas product at a temperature between 70 kelvin and 100 kelvin, preferably around 80 kelvin and thus obtaining a precooled hydrogen product,
∘ cooling the precooled hydrogen gas product under conditions effective for cooling said precooled hydrogen gas product at a temperature between 10 kelvin and 50 kelvin, preferably around 20 kelvin, and thus liquefying the hydrogen gas product to obtain liquid hydrogen,

- Cooling the hydrogen gas product by heat exchange with at least part of the ammonia feedstock stream upstream the cooling of the precooled hydrogen gas product.

## Description

The field of the present invention is that of a process for producing and liquefying hydrogen. The invention also relates to an installation for producing and liquefying hydrogen.

Ammonia is being explored as a hydrogen carrier molecule or no CO2 emissions fuel with advantages in shipping large amounts over long distances. For example, it is well known to produce hydrogen by ammonia cracking. The hydrogen needs to be further liquefied for example for its transportation. Hence, it is necessary to have a hydrogen liquefier downstream the ammonia conversion process into a hydrogen gas product.

The production and liquefaction of hydrogen is costly and requires a high quantity of energy. The invention proposes a process for producing and liquefying hydrogen utilizing the cold energy available in an ammonia feedstock stream to the hydrogen liquefaction unit, thereby reducing the cost of producing and liquifying hydrogen and improving the efficiency of the liquefied hydrogen production.

For this purpose, the invention proposes a process for producing and liquefying hydrogen, said process comprising the following steps:
- Providing an ammonia feedstock stream,
- Producing a hydrogen gas product by a gas conversion,
- Wherein at least part of said ammonia feedstock stream is converted by said gas conversion and/or at least part of said ammonia feedstock stream is combusted to bring heat to the process, in particular to said gas conversion,
- Liquefying the hydrogen gas product at least by:
   ∘ precooling said hydrogen gas product under conditions to precool said hydrogen gas product at a temperature between 70 kelvin and 100 kelvin, preferably around 80 kelvin and thus obtaining a precooled hydrogen product,
   ∘ cooling the precooled hydrogen gas product under conditions effective for cooling said precooled hydrogen gas product at a temperature between 10 kelvin and 50 kelvin, preferably around 20 kelvin, and thus liquefying the hydrogen gas product to obtain liquid hydrogen,
- cooling the hydrogen gas product by heat exchange with at least part of the ammonia feedstock stream upstream the cooling of the precooled hydrogen gas product.

The ammonia feedstock stream in the present disclosure is understood as a feedstock stream arranged to be converted by a gas conversion and / or to be combusted in a combustion chamber to heat a gas reaction.

In one embodiment, the gas conversion generates an effluent gas product from which the hydrogen gas product is derived.

In one embodiment, the at least part of the ammonia feedstock stream is converted by the gas conversion comprising an endothermic reaction, in particular converted by said endothermic reaction into said effluent gas product comprising hydrogen.

In one embodiment, the at least part of the ammonia feedstock stream is converted by the gas conversion comprising an ammonia cracking reaction, in particular converted by said ammonia cracking reaction into said effluent gas product comprising hydrogen and nitrogen. Said effluent gas may also comprise unconverted ammonia.

In one embodiment, the at least part of the ammonia feedstock stream is combusted to bring heat to said gas conversion comprising an endothermic reaction. In another example the heat could be brought to another step of the process, for example to a distillation step.

In one embodiment, said gas conversion comprises the conversion of a hydrocarbon feedstock into said effluent gas product being a synthesis gas. Said gas conversion may alternatively comprise an ammonia cracking reaction.

In one embodiment, the ammonia feedstock stream is vaporized and at least part of the vaporized ammonia feedstock stream is converted by said gas conversion and/or at least part of the vaporized ammonia feedstock stream is combusted to bring heat to the process, in particular to said gas conversion.

According to one aspect of the invention, the process comprises a step of processing the effluent gas product, thereby recovering said hydrogen gas product. The processing step can be for example a purification step using a method such as Pressure Swing Adsorption (acronym PSA), cryogenic separation, membranes and/or Temperature Swing Adsorption (acronym TSA) to obtain the hydrogen gas product. The temperature of the hydrogen gas product following this step may be between 40°C and 50°C.

In one embodiment, the step of precooling said hydrogen gas product comprises introducing said hydrogen gas product in a precooling system comprising a precooling gas cycle in which a precooling gas circulates, under conditions effective for precooling said hydrogen gas product to a temperature between 70 kelvin and 100 kelvin, preferably around 80 kelvin to obtain a precooled hydrogen product.

In one embodiment, the precooling gas and the hydrogen gas product exchange heat during the precooling step.

In one embodiment, the step of cooling the precooled hydrogen gas product comprises introducing said precooled hydrogen gas product in a cooling system using a cooling gas cycle in which a cooling gas circulates, under conditions effective for cooling said precooled hydrogen gas product to a temperature between 10 kelvin and 50 kelvin, preferably around 20 kelvin, and thus liquefying the precooled hydrogen gas product to obtain liquid hydrogen.

In one embodiment, the cooling gas and the hydrogen gas product exchange heat during the step of liquefying the hydrogen gas product, in particular during the cooling of the precooled hydrogen gas product of the liquefying step.

In one embodiment, the step of liquefying the hydrogen gas product comprises the cooling of the hydrogen gas product by heat exchange with at least part of the ammonia feedstock stream.

According to one embodiment, the hydrogen gas product is cooled with only part of the ammonia feedstock stream.

According to one aspect of the invention, the provided ammonia feedstock stream has a temperature below 0°C but preferably below -25°C.

According to one aspect of the invention, the hydrogen gas product is cooled with at least part of the ammonia feedstock upstream the precooling step.

In this embodiment, the hydrogen gas product temperature may be reduced by 30°C to 70°C, preferably by 40°C to 80°C, after the heat exchanges between said hydrogen gas product with all or part of the ammonia feedstock stream.

In one embodiment, the ammonia of the ammonia feedstock stream used to cool the hydrogen gas product is a liquid ammonia and said ammonia remains liquid after heat exchanges with said hydrogen gas product.

In one embodiment, the ammonia used to cool the hydrogen gas product is, in particular after being vaporized by other means, directed to the gas conversion after heat exchange with the hydrogen gas product.

In one embodiment, the hydrogen gas product is cooled with the at least part of the ammonia feedstock upstream the precooling step and downstream the processing step in the hydrogen gas product flow direction.

According to another embodiment, the hydrogen gas product is cooled with the ammonia feedstock stream as part of the precooling step, in particular by heat exchanges between the precooling gas cycle and the ammonia feedstock stream.

In this embodiment wherein the hydrogen gas product is cooled with the ammonia feedstock stream by heat exchanges between the precooling gas cycle and the ammonia feedstock stream, the heat exchange between the ammonia feedstock stream and the hydrogen gas product is performed by a first heat exchange between the ammonia feedstock stream and the precooling gas in a first heat exchanger obtaining a cooled precooling gas and a second heat exchange of the cooled precooling gas and the hydrogen gas product in a second heat exchanger.

In other words, the process comprises a first cold transfer of the ammonia feedstock stream to the precooling gas, and a second cold transfer of the cooled precooling gas stream to the hydrogen gas product.

In this embodiment, the precooling gas cycle temperature may be reduced by 15°C to 45°C, preferably by 25°C to 50°C after the heat exchanges between said gas cycle and the ammonia feedstock stream.

According to one aspect of the invention, the hydrogen product gas is cooled by the ammonia feedstock stream downstream the processing of the hydrogen gas product and upstream the liquefaction of said hydrogen gas product.

According to one aspect of the invention, the precooling gas circulating in the precooling gas cycle is compressed in the precooling cycle by at least one compressor.

According to one aspect of the invention, the compressed precooling gas is cooled by heat exchanges with the ammonia feedstock stream and the cooled and compressed precooling gas exchanges heat with the hydrogen gas product. In particular, the cooled and compressed precooling gas is expanded and the expanded precooling gas recovers heat from the hydrogen gas product thereby precooling said hydrogen gas product.

According to one aspect of the invention, the precooling gas is cooled, at least in part, by heat exchanges with the ammonia feedstock stream, the cooled precooling gas is compressed by the compressor and the cooled and compressed precooling gas exchanges heat with the hydrogen gas product.

In particular, the ammonia feedstock stream exchanges heat with the precooling gas downstream the compression of the precooling gas in the precooling gas flow direction, between the expansion and said compression of the precooling gas.

According to another embodiment, the hydrogen gas product is cooled with the ammonia feedstock stream upstream the precooling step and as part of the precooling step, in particular by heat exchanges between the precooling gas cycle and the ammonia feedstock stream. In other words, the hydrogen gas product is cooled with the ammonia feedstock stream both upstream the precooling step and as part of the precooling step.

The invention also proposes an installation for producing and liquefying hydrogen, said installation comprising:
- An entry for an ammonia feedstock stream,
- a gas conversion unit arranged for producing a hydrogen gas product,
- optionally, a combustion chamber arranged for the combustion of the ammonia feedstock stream, in particular arranged in heat exchange relationship with said gas conversion unit,
- An ammonia feedstock stream circulation duct fluidically connected to the gas conversion unit for producing said hydrogen gas product by a gas conversion of the ammonia feedstock stream and/or fluidically connected to the combustion chamber,
- A liquefaction unit arranged for liquefying the hydrogen gas product,
- At least one heat exchanger arranged for the transfer of heat from the hydrogen gas product to the ammonia feedstock stream.

In one embodiment, the gas conversion unit is arranged to convert the ammonia feedstock stream into an effluent gas comprising hydrogen by a gas conversion.

In one embodiment, the gas conversion unit comprises a cracker arranged to crack the ammonia feedstock stream into said effluent gas comprising hydrogen and nitrogen.

In one embodiment, the gas conversion unit comprises a reactor arranged to convert a hydrocarbon feedstock into said effluent gas product, said effluent gas product being a synthesis gas product. For example, the reactor is a reformer.

In one embodiment, the installation comprises an ammonia vaporizer arranged to vaporize the ammonia feedstock stream upstream the gas conversion unit and/or the combustion chamber.

In one embodiment, the installation comprises a purification unit arranged to purify the effluent gas product, thereby recovering the hydrogen gas product. For example the purification unit comprises a pressure swing adsorption purification unit, a cryogenic separation purification unit, membranes, and/or a temperature Swing Adsorption (acronym TSA) purification unit.

In one embodiment, the liquefaction unit comprises a precooling system arranged to precool the hydrogen gas product at a temperature between 70 kelvin and 100 kelvin, preferably around 80 kelvin and to obtain a precooled hydrogen gas product.

In one embodiment, the precooling system comprises a precooling gas cycle for the circulation of a precooling gas under conditions effective for precooling said hydrogen gas product to a temperature between 70 kelvin and 100 kelvin, preferably around 80 kelvin to obtain a precooled hydrogen product. The precooling gas is for example nitrogen.

In one embodiment, the liquefaction unit comprises a cooling system arranged to cool the precooled hydrogen gas product under conditions effective for cooling said precooled hydrogen gas product to a temperature between 10 kelvin and 50 kelvin, preferably around 20 kelvin, and thus liquefying the hydrogen gas product to obtain liquid hydrogen.

In one embodiment, the cooling system comprises a cooling gas cycle for the circulation of a cooling gas under conditions effective for cooling said precooled hydrogen gas product to a temperature between 10 kelvin and 50 kelvin, preferably around 20 kelvin, to liquefy the precooled hydrogen gas product to obtain liquid hydrogen.

In one embodiment, the installation comprises a waste heat boiler arranged to cool the effluent gas product, said waste heat boiler being arranged downstream the gas conversion unit and upstream the purification unit.

In one embodiment, the installation comprises a wash column arranged to separate the unconverted ammonia from the effluent gas product by absorption, in particular by washing the effluent gas product.

In one embodiment, the installation comprises a cooling water heat exchanger arranged to cool the washed effluent gas product, said cooling water heat exchanger being arranged between the washing column and the purification unit.

In one embodiment, the at least one heat exchanger arranged for the transfer of heat from the hydrogen gas product to the ammonia feedstock stream is arranged upstream the cooling system in the hydrogen gas product flow direction. The heat exchanger is for example a shell-and-tube heat exchanger.

In one embodiment, the at least one heat exchanger is arranged upstream the precooling system in the hydrogen gas product flow direction.

In one embodiment, the at least one heat exchanger is comprised in the precooling system.

In one embodiment, the at least one heat exchanger is arranged downstream the purification unit and upstream the precooling system in the hydrogen gas product flow direction. In other words, the at least one heat exchanger is arranged to cool the hydrogen gas product downstream the purification by the purification unit and upstream the precooling of said hydrogen gas product by the precooling system.

In one embodiment, the at least one heat exchanger comprises a first heat exchanger arranged to exchange heat between the precooling gas circulating in the precooling gas cycle and the ammonia feedstock stream and thus obtain a cooled precooling gas, and a second heat exchanger arranged to exchange heat between the cooled precooling gas and the hydrogen gas product. In this embodiment, the first heat exchanger and/or the second heat exchanger is for example a shell-and-tube heat exchanger or a Brazed Aluminum Heat Exchangers (BAHX) heat exchanger.

In one embodiment, the precooling system comprises at least one compressor arranged to compress the precooling gas in the precooling gas cycle.

In one embodiment, the precooling system comprises at least one expansion device arranged to expand the precooling gas, in particular the compressed precooling gas.

In one embodiment, the first heat exchanger is arranged downstream the compressor and upstream the second heat exchanger in the precooling gas flow direction. In other words, the first heat exchanger is arranged to cool the compressed precooling gas with the ammonia feedstock stream and the second heat exchanger is arranged to cool the hydrogen gas product with the cooled and compressed precooling gas. In particular, the first heat exchanger is arranged downstream the compressor and upstream the expansion device of the precooling system in the precooling gas flow direction.

In one embodiment, the first heat exchanger is arranged downstream the second heat exchanger, the second heat exchanger being arranged to exchange heat between the cooled precooling gas and the hydrogen gas product and upstream the compressor in the precooling gas flow direction. In other words, the first heat exchanger is arranged to cool the precooling gas with the ammonia feedstock stream upstream the compressor in the precooling gas flow direction and the second heat exchanger is arranged to cool hydrogen gas product with the cooled and compressed precooling gas. In particular, the first heat exchanger is arranged downstream the expansion device and upstream the compressor of the precooling system in the precooling gas flow direction.

According to another embodiment, the at least one heat exchanger comprises:
- in the precooling system:
   - a first heat exchanger arranged to exchange heat between the precooling gas and the ammonia feedstock stream,
   - a second heat exchanger arranged to exchange heat between the cooled precooling gas and the hydrogen gas product,
   - a third heat exchanger arranged upstream the precooling system in the hydrogen gas product flow direction, said third heat exchanger being arranged to exchange heat between the hydrogen gas product and the ammonia feedstock stream upstream the precooling system in the hydrogen gas product flow direction.

Further features, details and advantages of the invention will become more clearly apparent from reading the description given below by way of indication with reference to the drawings, in which:
[Fig. 1] is a schematic representation of the process of the invention according to a first embodiment;
[Fig. 2] is a schematic representation of the process of the invention according to a second embodiment;
[Fig. 3] is a schematic representation of the process of the invention according to a third embodiment;
[Fig. 4] is a schematic representation of the process of the invention according to a fourth embodiment;
[Fig. 5] is a schematic representation of the process of the invention according to a fifth embodiment.

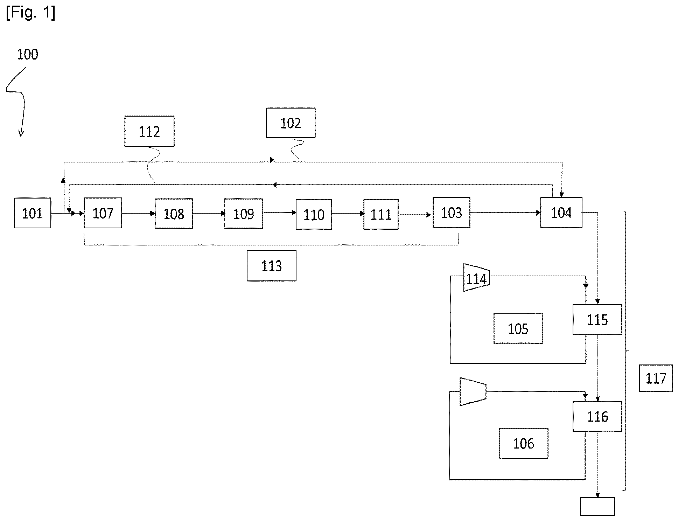

The figures 1 to 5 represent different embodiments of a process for producing and liquefying hydrogen according to the invention.

The process 100, 200, 300, 400, 500 comprises the following steps:
- Providing an ammonia feedstock stream 101, 201, 301, 401, 501,
- Producing a hydrogen gas product 113, 213, 313, 413, 513 by a gas conversion 108, 208, 308, 408, 508,
- Wherein at least part of said ammonia feedstock stream is converted by said gas conversion 108, 208, 308, 408, 508 and/or at least part of said ammonia feedstock stream is combusted to bring heat in particular to said gas conversion 108, 208, 308, 408, 508,
- Liquefying the hydrogen gas product 117, 217, 317, 417, 517 at least by:
   - Precooling 105, 205, 305, 405, 505 said hydrogen gas product under conditions to precool said hydrogen gas product at a temperature between 70 kelvin and 100 kelvin, preferably around 80 kelvin and thus obtaining a precooled hydrogen product,
   - Cooling 106, 206, 306, 406, 506 the precooled hydrogen gas product under conditions effective for cooling said precooled hydrogen gas product at a temperature between 10 kelvin and 50 kelvin, preferably around 20 kelvin, and thus liquefying the hydrogen gas product to obtain liquid hydrogen,
   - Cooling the hydrogen gas product by heat exchange with at least part of the ammonia feedstock stream 104, 204, 304, 404a, 404b, 504a, 504b upstream the cooling of the precooled hydrogen gas product 106, 206, 306, 406, 506.

"Part of the ammonia" means that only a part of the ammonia feedstock stream may be used to cool the hydrogen gas product, while at least another part is arranged for example to produce the hydrogen gas product in a gas conversion and/or to be combusted to bring heat to a gas reaction.

The step of providing 101, 201, 301, 401, 501 the ammonia feedstock stream comprises here pumping said ammonia feedstock stream.

After providing the ammonia feedstock stream, said ammonia feedstock stream is vaporized 107, 207, 307, 407, 507 and at least part of the vaporized ammonia feedstock stream is converted by said gas conversion 108, 208, 308, 408, 508 and/or at least part of the vaporized ammonia feedstock stream is combusted to bring heat in particular to said gas conversion 108, 208, 308, 408, 508. In another example the heat could be brought to another step of the process, for example to a distillation step.

The gas conversion 108, 208, 308, 408, 508 generates an effluent gas product from which the hydrogen gas product is derived. The effluent gas comprises hydrogen, nitrogen and unconverted ammonia. The ammonia feedstock stream is converted by a gas conversion 108, 208, 308, 408, 508 comprising an endothermic reaction, in particular converted by said endothermic reaction into said effluent gas product comprising hydrogen. For example, the ammonia feedstock stream is converted by a gas conversion 108, 208, 308, 408, 508 comprising an ammonia cracking reaction, in particular converted by said ammonia cracking reaction into said effluent gas product comprising hydrogen and nitrogen. Said effluent gas may also comprise unconverted ammonia. When the conversion gas comprises an ammonia cracking reaction, the ammonia feedstock stream may also be combusted to bring heat to said ammonia cracking reaction. In other words, the ammonia feedstock stream may be comprised in a fuel gas to heat said ammonia cracking reaction. In another embodiment, another fuel gas may be used to heat the ammonia cracking reaction, such as a fuel gas that does not comprise the ammonia feedstock stream.

In another example not represented here, said gas conversion 108, 208, 308, 408, 508 comprises the conversion of a hydrocarbon feedstock into said effluent gas product being a synthesis gas. The gas conversion 108, 208, 308, 408, 508 comprises for example a steam methane reforming reaction. At least part of the ammonia feedstock stream may be combusted to bring heat to said gas conversion 108, 208, 308, 408, 508 comprising an endothermic reaction.

The effluent gas product is then cooled with a waste heat boiler 109, 209, 309, 409, 509.

Here, the process comprises a step of separating the unconverted ammonia from said effluent gas product by absorption 110, 210, 310, 410, 510, in particular by washing the effluent gas product, for example with water. The washed effluent gas product may then be cooled in a cooling water heat exchanger 111, 211, 311, 411, 511. For example, the released hydrogen gas product temperature is reduced by 10°C to 20°C during this step. For example, the released hydrogen gas product may have a temperature between 45°C and 55°C before the heat exchanges in the water heat exchanger and the released hydrogen gas product may have a temperature between 35°C and 45°C after the heat exchanges in the water heat exchanger.

According to one aspect of the invention, the processing step is realized after cooling the washed effluent gas product with the water heat exchanger.

The process shown in figures 1 to 5 also comprises a step of processing 103, 203, 303, 403, 503 the effluent gas product, thereby recovering said hydrogen gas product. The processing step 103, 203, 303, 403, 503 can be for example a purification step using a method such as Pressure Swing Adsorption (acronym PSA), cryogenic separation, membranes, Temperature Swing Adsorption (acronym TSA) to obtain the hydrogen gas product. The temperature of the hydrogen gas product following this step may be between 40°C and 50°C.

For liquefying 117, 217, 317, 417, 517 the hydrogen gas product, said hydrogen gas product is precooled 105, 205, 305, 405, 505 by introducing it in a precooling system, in particular using a precooling gas cycle in which a precooling gas circulates, under conditions effective for precooling said hydrogen gas product to a temperature between 70 kelvin and 100 kelvin, preferably around 80 kelvin to obtain a precooled hydrogen product. The precooling gas and the hydrogen gas product exchange heat during the precooling step 105, 205, 305, 405, 505.

Then, the precooled hydrogen gas product is cooled 106, 206, 306, 406, 506 by introducing said precooled hydrogen gas product in a cooling system, in particular using a cooling gas cycle in which a cooling gas circulates, under conditions effective for cooling said precooled hydrogen gas product to a temperature between 10 kelvin and 50 kelvin, preferably around 20 kelvin, and thus liquefying the precooled hydrogen gas product to obtain liquid hydrogen.

The process comprises at least one step of cooling the hydrogen gas product with the ammonia feedstock stream 104, 204, 304, 404, 504. A part of the ammonia feedstock stream is directed 102, 202, 302, 402, 502 to the cooling step of the hydrogen gas product with the ammonia feedstock stream. The hydrogen gas product is cooled 104, 204, 304, 404, 504 by heat exchanges with the ammonia feedstock stream. The ammonia of the ammonia feedstock stream used to cool the hydrogen gas product is a liquid ammonia and said ammonia remains liquid after heat exchanges with said hydrogen gas product. After the heat exchanges between the ammonia feedstock stream and the hydrogen gas product, the ammonia used to cool the hydrogen gas product is directed to the gas conversion 112, 212, 312, 412, 512.

The figure 1 discloses the process 100 of the invention according to a first embodiment. In this embodiment, the hydrogen gas product is cooled 104 with the ammonia feedstock upstream the precooling step 105 by heat exchanges between the hydrogen gas product and the ammonia feedstock stream in a heat exchanger such as a shell-and-tube heat exchanger. More precisely, the hydrogen gas product is cooled 104 with the ammonia feedstock upstream the precooling step 105 and downstream the processing step 103 in the hydrogen gas product flow direction. In this embodiment, the hydrogen gas product temperature may be reduced by 30°C to 70°C, preferably by 40°C to 70°C, preferably by 50°C to 70°C after the heat exchanges between said hydrogen gas product with the ammonia feedstock stream. For example, the hydrogen gas product temperature before the heat exchanges with the ammonia feedstock stream may be of 40°C to 50°C and the hydrogen gas product temperature may be of -15°C to -25°C after the heat exchanges with the ammonia feedstock stream.

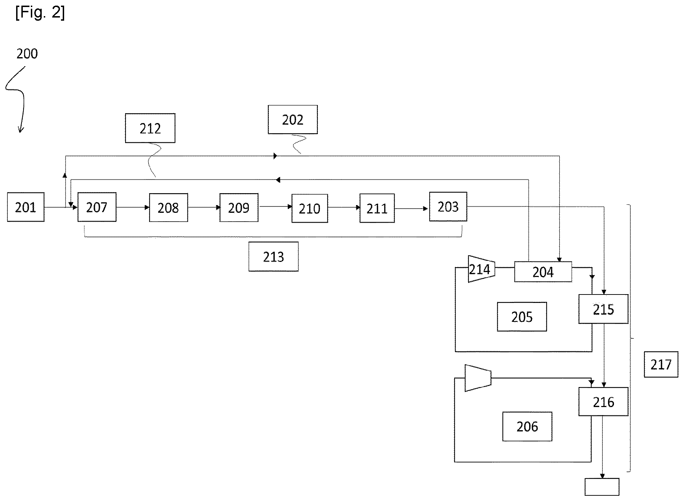

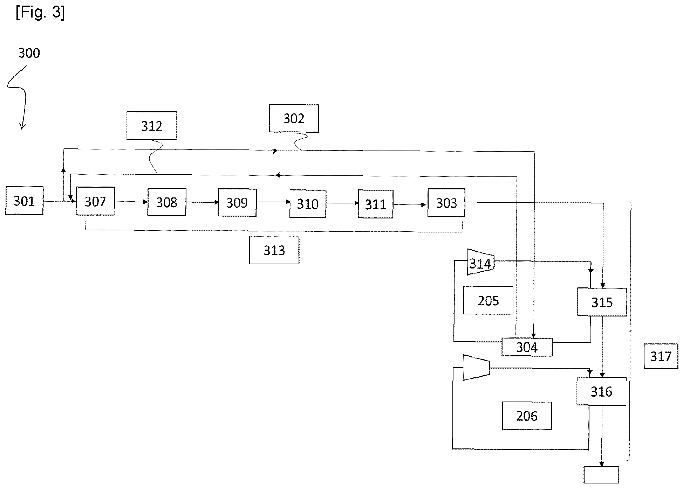

The figure 2 and the figure 3 disclose two embodiments in which the hydrogen gas product is cooled 204, 304 with the ammonia feedstock stream as part of the precooling step 205, 305, in particular by heat exchanges between the precooling gas cycle and the ammonia feedstock stream. The precooling system comprises a first heat exchanger arranged to transfer the heat of the ammonia feedstock stream to the precooling gas 204, 304, and a second heat exchanger arranged to transfer the heat of the cooled precooling gas stream to the hydrogen gas product 215, 315. In this embodiment, the gas cycle temperature may be reduced by 15°C to 45°C, preferably by 25°C to 45°C, preferably by 35°C to 45°C after the heat exchanges between said gas cycle and the ammonia feedstock stream. For example, the gas cycle temperature before the heat exchanges with the ammonia feedstock stream may be of 25°C to 35°C and the gas cycle temperature may be of -10°C to -20°C after the heat exchanges with the ammonia feedstock stream.

The precooling gas circulating in the precooling gas cycle is compressed 114, 214, 314, 414, 514 in the precooling cycle by at least one compressor. The hydrogen gas product may be cooled with the ammonia feedstock stream simultaneously with the precooling of the hydrogen gas product.

In the embodiment of the figure 2, the compressed 214 precooling gas is first cooled 204 by heat exchanges with the ammonia feedstock stream and the cooled 204 and compressed 214 precooling gas exchanges heat with the hydrogen gas product 215. In particular, the compressed precooling gas is cooled, the cooled precooling gas is expanded (not shown here) and the expanded precooling gas recovers heat from the hydrogen gas product thereby precooling said hydrogen gas product. In this case, the ammonia feedstock stream exchanges heat with the precooling gas downstream the compression of the precooling gas.

In the embodiment of the figure 3, the precooling gas is cooled 304 by heat exchanges with the ammonia feedstock stream, the cooled precooling gas is compressed 314 by the compressor and the cooled 304 and compressed 314 precooling gas exchanges heat with the hydrogen gas product 315.In particular, the ammonia feedstock stream exchanges heat with the precooling gas downstream the compression the precooling gas in the precooling gas flow direction, in particular between the expansion and said compression of the precooling gas. In this embodiment, the precooling gas may be cooled by another means.

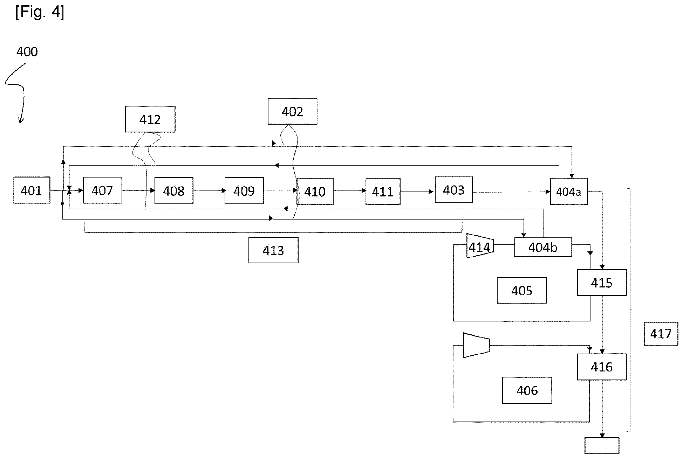

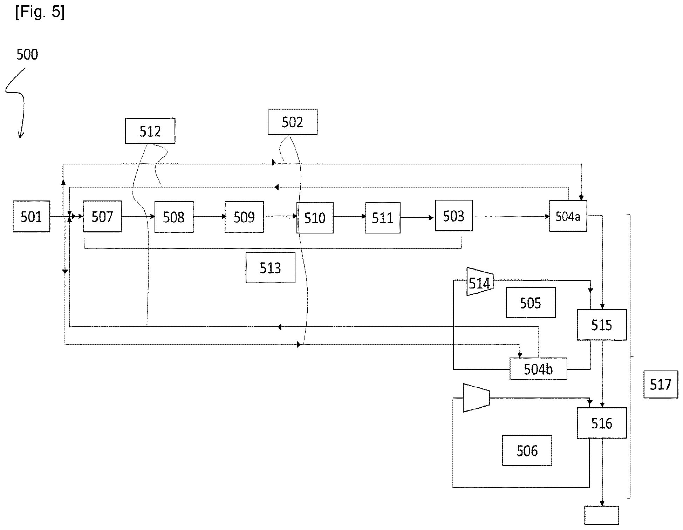

The figure 4 represents a process comprising the features of the first and second embodiment, and the figure 5 represents a process comprising the features of the first and third embodiment. Thus, the hydrogen gas product is cooled with the ammonia feedstock stream upstream the precooling step and as part of the precooling step, in particular by heat exchanges between the precooling gas cycle and the ammonia feedstock stream. In other words, the hydrogen gas product is cooled with the ammonia feedstock stream both upstream the precooling step and as part of the precooling step.

## Claims

1. A process (100, 200, 300, 400, 500) for producing and liquefying hydrogen, said process comprising the following steps:
- Providing an ammonia feedstock stream (101, 201, 301, 401, 501),
- Producing a hydrogen gas product (113, 213, 313, 413, 513) by a gas conversion (108, 208, 308, 408, 508),
- Wherein at least part of said ammonia feedstock stream is converted by said gas conversion (108, 208, 308, 408, 508) and/or at least part of said ammonia feedstock stream is combusted to bring heat to the process, in particular to said gas conversion (108, 208, 308, 408, 508),
- Liquefying (117, 217, 317, 417, 517) the hydrogen gas product at least by:
- precooling said hydrogen gas product (105, 205, 305, 405, 505) under conditions to precool said hydrogen gas product at a temperature between 70 kelvin and 100 kelvin, preferably around 80 kelvin and thus obtaining a precooled hydrogen product,
- cooling the precooled hydrogen gas product (106, 206, 306, 406, 506) under conditions effective for cooling said precooled hydrogen gas product at a temperature between 10 kelvin and 50 kelvin, preferably around 20 kelvin, and thus liquefying the hydrogen gas product to obtain liquid hydrogen,
- Cooling the hydrogen gas product by heat exchange with at least part of the ammonia feedstock stream (104, 204, 304, 404a, 404b, 504a, 504b) upstream the cooling of the precooled hydrogen gas product (106, 206, 306, 406, 506).

2. A process according to claim 1 wherein the gas conversion (108, 208, 308, 408, 508) generates an effluent gas product from which the hydrogen gas product is derived.

3. A process according to one of claims 1 to 2, wherein the at least part of the ammonia feedstock stream is combusted to bring heat to said gas conversion (108, 208, 308, 408, 508) comprising an endothermic reaction.

4. A process according to one of claims 1 to 3, wherein the ammonia feedstock stream is vaporized (107, 207, 307, 407, 507) and at least part of the vaporized ammonia feedstock stream is converted by said gas conversion (108, 208, 308, 408, 508) and/or at least part of the vaporized ammonia feedstock stream is combusted to bring heat to the process, in particular to said gas conversion.

5. A process according to claim 2 or one of claims 3 or 4 in combination with claim 2, wherein the process comprises a step of processing (103, 203, 303, 403, 503) the effluent gas product, thereby recovering said hydrogen gas product.

6. A process according to one of claims 1 to 5, wherein the step of precooling said hydrogen gas product (105, 205, 305, 405, 505) comprises introducing said hydrogen gas product in a precooling system comprising a precooling gas cycle in which a precooling gas circulates, under conditions effective for precooling said hydrogen gas product to a temperature between 70 kelvin and 100 kelvin, preferably around 80 kelvin to obtain a precooled hydrogen product.

7. A process according to one of claims 1 to 6, wherein the provided ammonia feedstock stream has a temperature below 0°C, preferably below -25°C.

8. A process according to one of the preceding claims, wherein, the hydrogen gas product is cooled with at least part of the ammonia feedstock (104, 404a, 504a) upstream the precooling step (105, 205, 305, 405, 505).

9. A process according to one of the preceding claims, wherein the hydrogen gas product is cooled with the ammonia feedstock stream (204, 304, 404b, 504b) as part of the precooling step (105, 205, 305, 405, 505), in particular by heat exchanges between the precooling gas cycle and the ammonia feedstock stream.

10. An installation for producing and liquefying hydrogen, said installation comprising:
- An entry for an ammonia feedstock stream,
- a gas conversion unit arranged for producing a hydrogen gas product,
- Optionally, a combustion chamber arranged for the combustion of the ammonia feedstock stream, in particular arranged in heat exchange relationship with said gas conversion unit,
- An ammonia feedstock stream circulation duct fluidically connected to the gas conversion unit for producing said hydrogen gas product by a gas conversion of the ammonia feedstock stream and/or fluidically connected to the combustion chamber,
- A liquefaction unit arranged for liquefying the hydrogen gas product,
- At least one heat exchanger arranged for the transfer of heat from the hydrogen gas product to the ammonia feedstock stream.

11. An installation according to claim 10, wherein the gas conversion unit is arranged to convert the ammonia feedstock stream into an effluent gas comprising hydrogen by a gas conversion.

12. An installation according to one of claims 10 to 11, wherein the installation comprises a purification unit arranged to purify the effluent gas product, thereby recovering the hydrogen gas product.

13. An installation according to one of claims 10 to 12, wherein the liquefaction unit comprises a precooling system arranged to precool the hydrogen gas product at a temperature between 70 kelvin and 100 kelvin, preferably around 80 kelvin and to obtain a precooled hydrogen gas product.

14. An installation according to the preceding claim, wherein the at least one heat exchanger is arranged upstream the precooling system in the hydrogen gas product flow direction.

15. An installation according to one of claims 13 to 14, wherein the at least one heat exchanger is comprised in the precooling system.
